# EUROPEAN PATENT SPECIFICATION

(11) **EP 2 578 914 B1**
(45) Date of publication and mention of the grant of the patent: **01.07.2015**
(21) Application number: 12187248.5
(22) Date of filing: 04.10.2012
(51) Int. Cl.: F16L 3/04

(54) **A clip for wiring tubes having a grooved surface**
Klammer für Leitungsrohre mit gerillter Oberfläche
Pince pour tubes de câblage présentant une surface rainurée

(30) Priority: 04.10.2011 SE 1150913
(43) Date of publication of application: 10.04.2013
(73) Proprietor: Schneider Electric Industries SAS, 92500 Rueil-Malmaison (FR)
(72) Inventor: Sundström, Inge, 611 45 Nyköping (SE)
(74) Representative: Groth & Co. KB

(56) References cited:
- WO-A1-2005/052427
- DE-U- 1 922 081
- GB-A- 2 294 086
- US-A- 1 818 625

## Description

### Technical Field

The present invention relates to the area of the installation of electrically conducting cables in wiring tubes and particularly to the fastening of such wiring tubes by means of so-called clips.

### Background of the Invention

Conventional clips are used for the mounting of varying types of wiring tubes. The method of operation is that the clip is snapped over the tube and is nailed or fastened with screws in a support. In this mounting, the clip is held manually in the proper position in relation to the wiring tube, whereupon nailing/screwing is effected.

A problem of this mounting is that the clip tends to slide along the wiring tube and also rotate on the same when the clip is to be attached to the support, wherein the fitter has to correct the position before fastening is effected.

A further problem of the clip not being attached to the wiring tube is that the wiring tube after mounting tends to slide in the clip. This means that an electrician who is about to run cables through the wiring tube will notice that the entire wiring tube will yield in a swinging way, wherein running through of the cables will be made considerably more difficult. Thus, said wiring tubes have to be properly clipped to eliminate such a "swing" upon the cable running.

A cable clip is previously known by the Swedish patent application 040156-6, see also GB2294086 on which is based claim 1, wherein the inside has been provided with a soft and elastic layer that to some extent results in an increased friction between the clip and a communication cable to be attached to a support. However, this clip allows gliding between the cable and the clip in spite of the higher friction.

### The Object of the Invention

The object of the present invention is to provide a new type of clip particularly adapted to essentially cylindrical wiring tubes the outer surface of which is provided with grooves, for instance flexible wiring tubes.

The object is further to provide such a clip that reliably keeps the wiring tube in the axial direction i.e., to eliminate that the wiring tube slides in relation to the clip.

The object is further to provide such a clip that in addition facilitates the mounting of the wiring tube.

### Summary of the Invention

By the present invention, as the same is seen in the independent claim, the above-mentioned objects are met, whereby said disadvantages have been eliminated. Suitable embodiments of the invention are defined in the dependent claims.

The invention concerns a clip for the clamping of a wiring tube having an outer surface provided with grooves. One type of said wiring tubes is often denominated flexible wiring tubes, which are provided with enclosing ridges having intermediate surrounding grooves. Also other types of grooved or slotted tubes are suitably mounted by means of clips according to the present invention. The clip comprises an arc-shaped holder part integrated with a fastening part provided with a support surface. This integration implies that the clip is cast or injection-moulded as a unitary article of a polymeric material. The fastening part is provided with a through hole oriented perpendicular to the support surface and through which hole, a fastening device can be applied and fix the fastening part with the holder part thereof against a support. In this connection, the holder part is formed to partly surround the wiring tube. Preferably, the enclosure is sufficiently large so that the clip can be attached by snap action and be retained on the wiring tube. On the side that is intended to face the wiring tube, when the clip is mounted, the clip is provided with a protuberance that is formed to engage said grooves and prevent a relative movement between the clip and the wiring tube. The protuberance may have different shapes, placement and extension but always with a direction and a size that corresponds to the groove or slot of the wiring tube. The placement may, for instance, be only on the holder part, i.e., only on the tube-enclosing part of the clip, or extend on the inside of the entire inner surface of the clip, i.e., both on the fastening part and on the holder part or only partly on the two parts. The shape of the protuberance may be as a pin or as a flange-shaped part.

In the invention, the protuberance is oriented perpendicular to the longitudinal axis of a mounted wiring tube. This orientation gives the same locking force between the clip and the tube in both directions of the extension of the tube. This also embraces protuberances which, for instance, are formed as pins.

In the invention, the protuberance is integrated with the fastening part and extends from the support surface and at least along the extension of half the fastening part. The protuberances are shaped as elongate ridges or edges, which further contribute to an increased lock force between the clip and the tube.

In one embodiment of the invention, the protuberance is at least partly integrated with the holder part and extends from the support surface of the fastening part and at least along a part of the extension of the holder part. This embodiment has an even more extended protuberance, which extends along a part of the circumference of the tube so as to thereby further increase the lock force between the clip and the tube.

In one embodiment of the invention, the protuberance is symmetrically placed in the middle of the fastening part. This embodiment allows different shapes and directions of the protuberance, which will be hidden by the fastening part when the clip is mounted onto the tube.

In one embodiment of the invention, the clip is provided with a second protuberance, which is formed to engage a parallel second groove. The addition of a second protuberance further increases the lock force between the clip and the tube. The two protuberances may, for instance, be placed asymmetrically at one side of the fastening part or holder part. The spacing between the protuberances is equal to the spacing between the grooves of the tube.

In one embodiment of the invention, the second protuberance has the same extension along the clip as the first protuberance. Thus, the two protuberances are identical.

In one embodiment of the invention, the first and the second protuberance are symmetrically placed on the clip. The symmetrical placement implies that the distribution of force in the clip becomes favourable, which is preferable from a strength point of view.

In one embodiment of the invention, the first and the second protuberance of the fastening part form outer side edges. This embodiment makes that the side edges of the clip engage the slots of the wiring tube. The formation of the protuberances in the form of side edges gives a maximum distance between the protuberances, which is favourable from a force distribution point of view.

In one embodiment of the invention, three protuberances are formed to engage parallel grooves in the wiring tube. The formation of the clip with three protuberances further increases the lock force between the clip and the tube.

In one embodiment of the invention, each one of the three protuberances has the same extension along the clip.

In one embodiment of the invention, all protuberances are symmetrically placed on the clip.

In one embodiment of the invention, two of the protuberances form the outer side edges of the fastening part.

In one embodiment of the invention, the fastening part and holder part of the clip have together a sufficient enclosure for the clip to be retained on the wiring tube. A suitable enclosure angle of such a retention is in the interval of 220°-280°.

The clip according to the invention is extraordinarily suitable to attach flexible wiring tubes the ridges and intermediate grooves of which have a uniform spacing along the longitudinal axis of the wiring tube.

In the embodiments of the clip wherein the same is provided with more than one protuberance situated beside each other in the axial direction of the wiring tube, the spacing between the protuberances is, as indicated above, identical to the spacing between the grooves of the wiring tube in question.

In these flexible wiring tubes, also the protuberances may be divided so that one or more protuberances are placed on the fastening part while one or more are placed on the holder part. The placement of one protuberance on the fastening part and one protuberance on the holder part eliminates angular rotation of the clip when the tube is loaded in the axial direction thereof.

All embodiments of the clip may also be manufactured of a material that obtains a rough surface structure, which contributes to increased friction between the clip and the tube when it is mounted.

### Brief Description of the Drawings

Now, the invention will be described in more detail, reference being made in connection with the accompanying drawing figures. The drawing figures show only explanatory sketches intended to facilitate the understanding of the invention.
- Figure 1: shows a perspective view of a clip according to the present invention mounted on a flexible wiring tube.
- Figure 2: shows a planar view of the mounted clip in a first embodiment from the under side of the clip.
- Figure 3: shows a planar view of the mounted clip in a second embodiment from the under side of the clip.
- Figure 4: shows a planar view of the mounted clip in a third embodiment from the under side of the clip.

### Description of the Invention

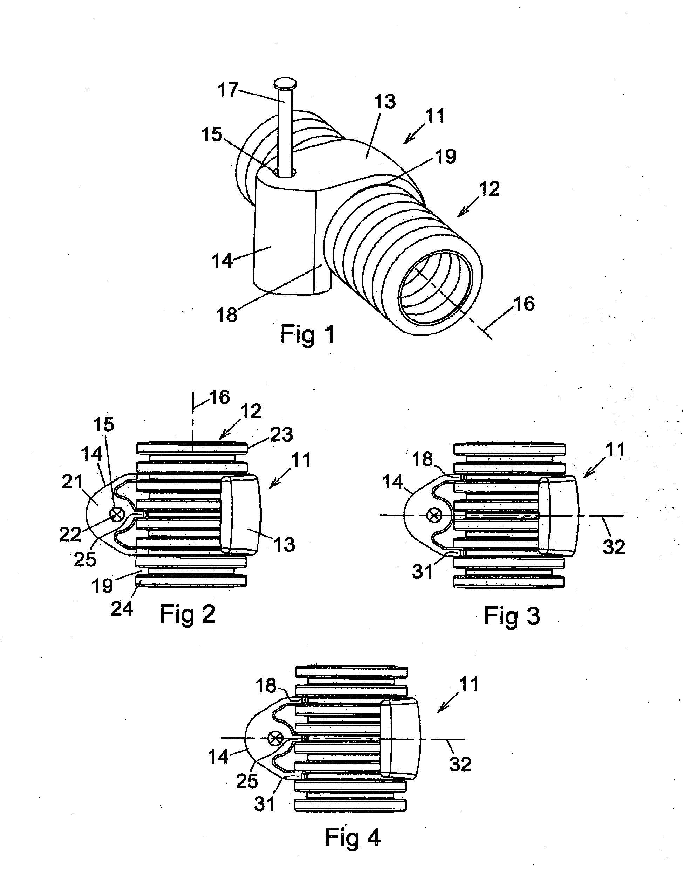

Figure 1 shows a clip 11 according to the invention, which clip is mounted onto a flexible wiring tube 12. The clip consists of an arc-shaped holder part 13 integrated with a fastening part 14. The fastening part is provided with a through hole 15 oriented perpendicular to the longitudinal axis 16 of the wiring tube 12. In the hole, a fastening device 17, in the form of a screw, is mounted, which can attach the clip and thereby the wiring tube to a support. The clip is provided with a protuberance 18 at one side thereof, which protuberance, when the clip is mounted, engages a groove 19 on the outer surface of the wiring tube 12. As seen in the figure, the holder part 13 is partly surrounding the wiring tube 12.

Figure 2 shows a first embodiment of the clip 11 from the under side thereof, which shows that the fastening part 14 is provided with a plane support surface 21 through which the hole 15 with the fastening device and the tip 22 thereof extends. The holder part 13 of the clip 11, together with the fastening part 14 thereof, surrounds the wiring tube 12 at an enclosure angle in the interval of 220°-280°. The figure shows the wiring tube 12 with the outer surface 23 thereof formed of the outer periphery of ridges 24 on the tube. Between each ridge 24, there is a groove 19. The direction of both the ridges and the grooves is tangential to the tube and perpendicular in relation to the longitudinal axis 16 of the tube. In the embodiment shown in the figure, the inside of the fastening part 14 of the clip 11 is provided with only one protuberance 25, which extends into a groove in the tube with an extension of the protuberance 25 that is perpendicular to the longitudinal axis 16 of the tube 12. In other respects, the fastening part 14 of the clip is formed with an extension along the outer surface 23 of the wiring tube and for possibly also connecting to the outer surface 23 of the tube 12.

Figures 3 and 4 show embodiments that in perspective view correspond with the embodiment shown in Figure 1, i.e., that both these latter embodiments are provided with protuberances that simultaneously are the outer side edge of the fastening part. The corresponding shown parts in Figure 3 and 4 have the same figure references as in Figure 2, and therefore the same are not repeated but apply also to the latter figures. With the exception of the described differences between the embodiments, these are in other respects equally formed.

Figure 3 shows a second embodiment of the clip 11 with the protuberance 18 as a second protuberance and having a third protuberance 31. Thus, the embodiment in Figure 3 is provided with two protuberances, *viz*. a second protuberance 18 and a third protuberance 31. Each one of these two protuberances extends into a groove in the tube with an extension of the protuberances 18, 31 that is perpendicularly oriented to the longitudinal axis of the wiring tube. The two protuberances 18, 31 form the outer side edges of the fastening part 14 and are accordingly symmetrically placed on the fastening part around the symmetry line 32 of the clip 11.

Figure 4 shows a third embodiment of the clip 11 with a first protuberance 25 placed and oriented as the embodiment shown in Figure 2. The clip is further provided with a second protuberance 18 and a third protuberance 31, which two protuberances are placed and oriented as the embodiment shown in Figure 3. In this third embodiment, all three protuberances are symmetrically placed on the fastening part 14 around the symmetry line 32 of the clip 11.

As seen in the subsequent claims, further embodiments in addition to those shown and described are feasible within the scope of the invention, for instance asymmetrical locations of the protuberance/protuberances or locations of protuberances in the holder part. Also a combination of located protuberances in the fastening part and the holder part is comprised by the invention.

It should also be appreciated that the invention is not limited to the shown design of the fastening part of the clip but this fastening part may be formed in the same way as conventional fastening parts of this type of clip are formed. For instance, the fastening part may be integrated with a screw plug already in the manufacture of the clip. This screw plug extends in the extension of the hole and aims at being pushed into a pre-drilled hole in the support, whereupon the fastening device is screwed into the fastening plug.

## Claims

1. Clip (11) for the clamping of a wiring tube (12) having an outer surface (23) provided with grooves (19), the clip (11) comprising an arc-shaped holder part (13) integrated with a fastening part (14) provided with a support surface (21), which fastening part (14) is provided with a through hole (15) oriented perpendicular to the support surface (14) and through which hole (15) a fastening device (17) can be applied and fix the fastening part (14) with the holder part (13) thereof against a support, the holder part (13) being formed to partly surround the wiring tube (12), and that the clip (11), on the side intended to face the wiring tube (12), is provided with a protuberance (18, 25, 31) that is formed to engage said grooves (19) and prevent a relative movement between the clip (11) and the wiring tube (12) and that the protuberance (18, 25, 31) is oriented with an extension perpendicular to the longitudinal axis (16) of a mounted wiring tube (12), and that the fastening part (14) and holder part (13) of the clip (11) together have an enclosure at an enclosure angle in the interval of 220°-280° for the clip (11) to be retained on the wiring tube (12), **characterized in that** the protuberance (18, 25, 31) is integrated with the fastening part (14) and extends from the support surface (21) and at least along the extension of half the fastening part (14) and that the protuberances are shaped as elongate ridges or edges.

2. Clip according to claim 1, **characterized in that** the protuberance (18, 25, 31) is at least partly integrated with the holder part (13) and extends from the support surface (21) of the fastening part (14) and at least along a part of the extension of the holder part (13).

3. Clip according to any one of claims 1-2, **characterized in that** the protuberance (25) is symmetrically placed in the middle of the fastening part (14).

4. Clip according to any one of claims 1-2, **characterized in that** the clip (11) is provided with two protuberances (18, 31), which are formed to engage parallel grooves (19) of the wiring tube (21).

5. Clip according to any one of claims 1-2, **characterized in that** the clip (11) is provided with three protuberances (18, 25, 31) each one of which is formed to engage parallel grooves (19) of the wiring tube (21).

6. Clip according to any one of claims 4-5, **characterized in that** each one of the protuberances (18, 25, 31) has the same extension along the clip (11).

7. Clip according to any one of claims 4-6, **characterized in that** the protuberances (18, 25, 31) are symmetrically placed on the clip (11).

8. Clip according to any one of claims 4-7, **characterized in that** two of the protuberances (18, 31) form the outer side edges of the fastening part (14).

## Patentansprüche

1. Klammer (11) zum Einklemmen eines Leitungsrohrs (12), dessen äußere Oberfläche (23) mit Rillen (19) ausgestattet ist, wobei die Klammer (11) ein bogenförmiges Halterungsteil (13) mit einem integrierten Befestigungsteil (14) umfasst, das eine Abstützungsoberfläche (21) aufweist, wobei das Befestigungsteil (14) mit einem durchgehenden Loch (15) versehen ist, das senkrecht zur Abstützungsoberfläche (21) verläuft, wobei durch das Loch (15) ein Befestigungselement (17) eingesetzt werden kann, um das Befestigungsteil (14) mit dem Halterungsteil (13) davon gegen eine Abstützung zu fixieren, wobei das Halterungsteil (13) ausgebildet ist, um das Leitungsrohr (12) teilweise zu umgeben, wobei die Klammer (11) an der Seite, die dem Leitungsrohr (12) zugewandt sein soll, einen Vorsprung (18, 25, 31) aufweist, der ausgebildet ist, um in die Rillen (19) einzugreifen und eine relative Bewegung zwischen der Klammer (11) und dem Leitungsrohr (12) zu verhindern, wobei der Vorsprung (18, 25, 31) mit einer Erstreckung senkrecht zur Längsachse (16) eines montierten Leitungsrohrs (12) ausgerichtet ist, wobei das Befestigungsteil (14) und das Halterungsteil (13) der Klammer (11) zusammen eine Umfassung mit einem Umfassungswinkel im Intervall von 220° bis 280° aufweisen, in dem die Klammer (11) am Leitungsrohr (12) festgehalten wird, **dadurch gekennzeichnet, dass** der Vorsprung (18, 25, 31) mit dem Befestigungsteil (14) integriert ist und sich von der Abstützungsoberfläche (21) und mindestens entlang der Erstreckung der Hälfte des Befestigungsteils (14) erstreckt, und wobei die Vorsprünge als längliche Rippen oder Kanten ausgebildet sind.

2. Klammer nach Anspruch 1, **dadurch gekennzeichnet, dass** der Vorsprung (18, 25, 31) mindestens teilweise mit dem Halterungsteil (13) integriert ist und sich von der Abstützungsoberfläche (21) des Befestigungsteils (14) aus und mindestens entlang einem Teil der Erstreckung des Halterungsteils (13) erstreckt.

3. Klammer nach einem der Ansprüche 1 bis 2, **dadurch gekennzeichnet, dass** der Vorsprung (25) symmetrisch in der Mitte des Befestigungsteils (14) platziert ist.

4. Klammer nach einem der Ansprüche 1 bis 2, **dadurch gekennzeichnet, dass** die Klammer (11) mit zwei Vorsprüngen (18, 31) ausgestattet ist, die ausgebildet sind, um in parallele Rillen (19) des Leitungsrohrs (12) einzugreifen.

5. Klammer nach einem der Ansprüche 1 bis 2, **dadurch gekennzeichnet, dass** die Klammer (11) mit drei Vorsprüngen (18, 25, 31) ausgestattet ist, von denen jeder ausgebildet ist, um in parallele Rillen (19) des Leitungsrohrs (12) einzugreifen.

6. Klammer nach einem der Ansprüche 4 bis 5, **dadurch gekennzeichnet, dass** jeder der Vorsprünge (18, 25, 31) die gleiche Erstreckung entlang der Klammer (11) hat.

7. Klammer nach einem der Ansprüche 4 bis 6, **dadurch gekennzeichnet, dass** die Vorsprünge (18, 25, 31) symmetrisch an der Klammer (11) platziert sind.

8. Klammer nach einem der Ansprüche 4 bis 7, **dadurch gekennzeichnet, dass** zwei der Vorsprünge (18, 31) die äußeren Seitenkanten des Befestigungsteils (14) bilden.

## Revendications

1. Pince (11) pour serrer un tube de câblage (12) ayant une surface extérieure (23) pourvue de rainures (19), la pince (11) comprenant une partie de retenue en forme d'arc (13) intégrée à une partie de fixation (14) pourvue d'une surface de support (21), laquelle partie de fixation (14) est pourvue d'un trou traversant (15) orienté perpendiculairement à la surface de support (21), et à travers lequel trou (15) un dispositif de fixation (17) peut être appliqué et peut fixer la partie de fixation (14) avec la partie de retenue (13) de celle-ci contre un support, la partie de retenue (13) étant formée de manière à entourer en partie le tube de câblage (12), et la pince (11), sur le côté destiné à faire face au tube de câblage (12), étant pourvue d'une protubérance (18, 25, 31) qui est formée de manière à s'engager avec lesdites rainures (19) et à empêcher un mouvement relatif entre la pince (11) et le tube de câblage (12) et la protubérance (18, 25, 31) étant orientée avec une extension perpendiculaire à l'axe longitudinal (16) d'un tube de câblage monté (12), et la partie de fixation (14) et la partie de retenue (13) de la pince (11) ayant ensemble une enceinte à un angle d'enceinte compris dans un intervalle de 220° à 280° pour que la pince (11) soit retenue sur le tube de câblage (12), **caractérisée en ce que** la protubérance (18, 25, 31) est intégrée à la partie de fixation (14) et s'étend depuis la surface de support (21) et au moins le long de l'extension de la moitié de la partie de fixation (14) et **en ce que** les protubérances sont formées en tant qu'arêtes ou bords allongés.

2. Pince selon la revendication 1, **caractérisée en ce que** la protubérance (18, 25, 31) est au moins en partie intégrée à la partie de retenue (13) et s'étend depuis la surface de support (21) de la partie de fixation (14) et au moins le long d'une partie de l'extension de la partie de retenue (13).

3. Pince selon l'une quelconque des revendications 1 à 2, **caractérisée en ce que** la protubérance (25) est placée de manière symétrique au milieu de la partie de fixation (14).

4. Pince selon l'une quelconque des revendications 1 à 2, **caractérisée en ce que** la pince (11) est pourvue de deux protubérances (18, 31), lesquelles sont formées de manière à s'engager avec des rainures parallèles (19) du tube de câblage (12).

5. Pince selon l'une quelconque des revendications 1 à 2, **caractérisée en ce que** la pince (11) est pourvue de trois protubérances (18, 25, 31), chacune d'entre elles étant formée de manière à s'engager avec des rainures parallèles (19) du tube de câblage (12).

6. Pince selon l'une quelconque des revendications 4 à 5, **caractérisée en ce que** chacune des protubérances (18, 25, 31) présente la même extension le long de la pince (11).

7. Pince selon l'une quelconque des revendications 4 à 6, **caractérisée en ce que** les protubérances (18, 25, 31) sont placées de manière symétrique sur la pince (11).

8. Pince selon l'une quelconque des revendications 4 à 7, **caractérisée en ce que** deux des protubérances (18, 31) forment les bords latéraux extérieurs de la partie de fixation (14).
